# EUROPEAN PATENT SPECIFICATION

(11) **EP 1 010 546 B1**
(45) Date of publication and mention of the grant of the patent: **05.10.2005**
(21) Application number: 99124567.1
(22) Date of filing: 09.12.1999
(51) Int. Cl.: B60B 3/16, B60B 27/00

(54) **Wheel hub unit**
Radnabeeinheit
Ensemble de moyeu de roue

(30) Priority: 15.12.1998 JP 35554998
(43) Date of publication of application: 21.06.2000
(73) Proprietor: Koyo Seiko Co., Ltd., Osaka (JP)
(72) Inventor: Murao, Satoru, c/o Koyo Seiko Co., Ltd., Osaka 542-0081 (JP); Kouda, Kanichi, c/o Koyo Seiko Co., Ltd., Osaka 542-0081 (JP)
(74) Representative: TER MEER - STEINMEISTER & PARTNER GbR

(56) References cited:
- EP-A- 0 568 958
- DE-C- 808 803
- US-A- 4 354 711
- US-A- 5 547 290

## Description

### BACKGROUND OF THE INVENTION

### Field of the Invention

The present invention relates to a wheel hub unit of an automobile, for example, and more specifically, to a hub unit in which a hub including a flange portion formed with a plurality of internal screws for bolting a wheel is integrated with a bearing outer ring.

### Description of the Related Art

Document EP-A-0568958 discloses a rolling element bearing for a wheel support assembly of a vehicle, of the type having centering means for a wheel and its associated brake element fixable for rotation with the outer ring of the bearing. The centering means are defined by respective cylindrical contact surfaces of different diameter formed on the outer periphery of a sleeve formed as an independent element interference-fitted in a frontal seat of the outer ring to project therefrom, in such a way as to be fixed for rotation with the outer ring against axial movement with respect thereto.

Moreover, document US-A-4,354,711 discloses a vehicle wheel assembly, comprising a detachable wheel mounted on a radial wheel mounting flange using a single wheel fastener and a conical disc spring to secure the wheel to the wheel mounting flange. The conical disc spring is deflected to a preselected compressed state by the fastener to exert a predetermined axial clamping force uniformly along an annular region of contact between the wheel and the disc spring and to resiliently pre-load the wheel bearing.

If a wheel such as a steel wheel which abuts with not a full circumference thereof on a brake disc when mounted is mounted to the above hub unit, circularity of raceways of a bearing outer ring, especially circularity of an inner side raceway is degraded. If the degradation is serious, sound may be generated or life of a bearing may be shortened.

The degradation of circularity does not especially become a problem in a case of an aluminum wheel which abuts with a full circumference thereof on the brake disc when the aluminum wheel is mounted to the hub unit but becomes a problem only in a case in which a wheel face to contact the brake disc is in such a shape as to abut with not a full circumference thereof on the brake disc when mounted to the same hub unit.

### SUMMARY OF THE INVENTION

Therefore, it is a main object of the present invention to provide a wheel hub unit which can suppress degradation of circularity of an outer ring raceway even if a wheel in such a shape as to abut with not a full circumference thereof on a brake disc is mounted to the wheel hub unit by screwing a bolt down into each internal screw in a flange portion integrated with an outer ring.

Other objects, features, and advantages of the present invention will become clear from the following description.

According to the present invention, there is provided a wheel hub unit having a hub integrated with an outer periphery of a bearing outer ring, wherein the bearing has an outer ring including a flange portion extending radially outward, an inner ring fitted to an outside of an axle, a plurality of balls mounted between the outer ring and the inner ring, and cages for respectively retaining the plurality of balls, and the flange portion is formed at a side face thereof with an internal screw for bolting a wheel and at a root portion of the flange portion on a radially inner side from a position where the internal screw is formed with a low-stiffness portion having stiffness for allowing the flange portion to be bent at the root portion when a bolt is screwed down into the internal screw.

In the invention, because bend of the flange portion due to screwing of the bolt is caused mainly at the low-stiffness portion to prevent the bend from reaching a position where the outer ring raceway is formed, circularity of the outer ring raceway is not degraded even if a wheel such as a wheel made of steel, a certain kind of aluminum wheel, which is in such a shape as to abut with not a full circumference thereof on a brake disc when mounted is mounted and a quiet and long wearing hub unit can be obtained.

Preferably, the low-stiffness portion includes a thin portion provided along a circumferential direction at the root portion of the flange portion. In this manner, it is possible to exhibit the above effects by a simple structure without substantial increase in cost.

### BRIEF DESCRIPTION OF THE DRAWINGS

These and other objects as well as advantages of the invention will become clear by the following description of preferred embodiments of the invention with reference to the accompanying drawings, wherein:
FIG. 1 is an axial sectional view of a wheel hub unit according to a preferred embodiment of the present invention;
FIG. 2 is a side view taken in a direction of an arrow A in FIG. 1;
FIG. 3 is a drawing showing a result of actual measurement of circularity of an outer ring inner side raceway in a state in which a wheel which is made of steel and abuts with not a full circumference thereof on a brake disk when mounted is mounted;
FIG. 4 is a graph showing a result of simulation of out-of-circularity of an outer ring inner side raceway of each of an example (A) to which the present invention is applied, prior art (B), a comparative example (C), the steel wheel which abuts with not a full circumference thereof on the brake disc when mounted being mounted to each of the above examples (A), (B), and (C), and a reference example (D) in which an aluminum wheel in such a shape as to abut with a full circumference thereof on the brake disc when mounted is mounted to the prior art based on a finite element method;
FIG. 5A is a diagrammatic sectional view of an essential portion showing a state in which a wheel such as a steel wheel and some of aluminum wheels, which abuts with not a full circumference thereof on the brake disc when mounted is bolted to the hub unit;
FIG. 5B is a diagrammatic sectional view of an essential portion showing a state in which a wheel such as many aluminum wheels which abuts with a full circumference thereof on the brake disc when mounted is bolted to the same hub unit;
FIG. 6 is a front view of a wheel showing a condition of contact of a wheel and a brake disc in a state in which the wheel such as the steel wheel which abuts with not the full circumference thereof on the brake disc when mounted is mounted to the hub unit; and
FIG. 7 is a drawing showing an example of a result of actual measurement of circularity of an outer ring inner side raceway in a state in which the wheel such as the steel wheel which abuts with the full circumference thereof on the brake disc when mounted is mounted to a conventional hub unit.

### DETAILED DESCRIPTION OF THE INVENTION

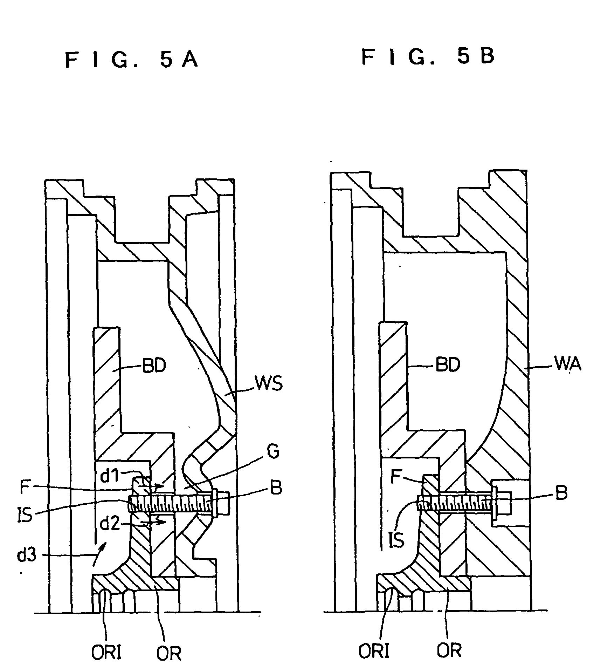

The present invention has been accomplished by earnestly studying a cause of degradation of outer ring raceways, the degradation being generated only when a wheel in such a shape as to abut with not a full circumference thereof on a brake disc when mounted is bolted to a hub unit. In the hub unit, a flange portion is integrated with a bearing outer ring, internal screws for bolting the wheel being cut in the flange portion. The cause will be described below with reference to FIGS. 5 to 7.

First, with reference to FIGS. 5A to 5B, the steel wheel (WS) is manufactured by presswork and abuts with not a full circumference thereof on a brake disc. Similarly, an aluminum wheel (WA) has a mounting face in such a shape as to abut with a full circumference thereof on the brake disc. With the bearing outer ring (OR), a hub is integrated. A flange portion (F) is provided to the bearing outer ring (OR). The internal screws (IS) are formed at three positions in a circumferential direction in the flange portion (F), for example. Both the steel wheel (WS) and the aluminum wheel (WA) are fixed with bolts (B) to the flange portions (F) through the brake discs (BD).

The aluminum wheel (WA) has the mounting face in such a shape as to abut with the full circumference thereof and abuts with the full circumference thereof including its portions in the vicinity of fastening portions by the bolts (B) on the brake disc (BD).

Because the steel wheel (WS) does not have such a mounting face, a gap (G) is created between the steel wheel (WS) and the brake disc (BD) in the vicinity of fastening portions by the bolts (B).

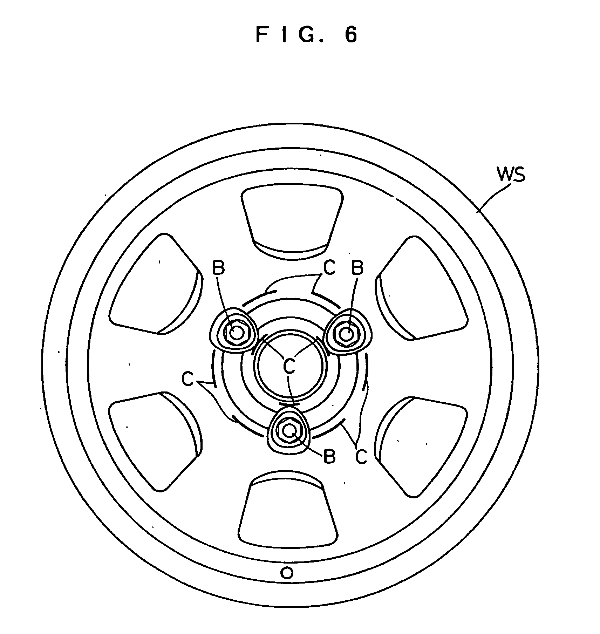

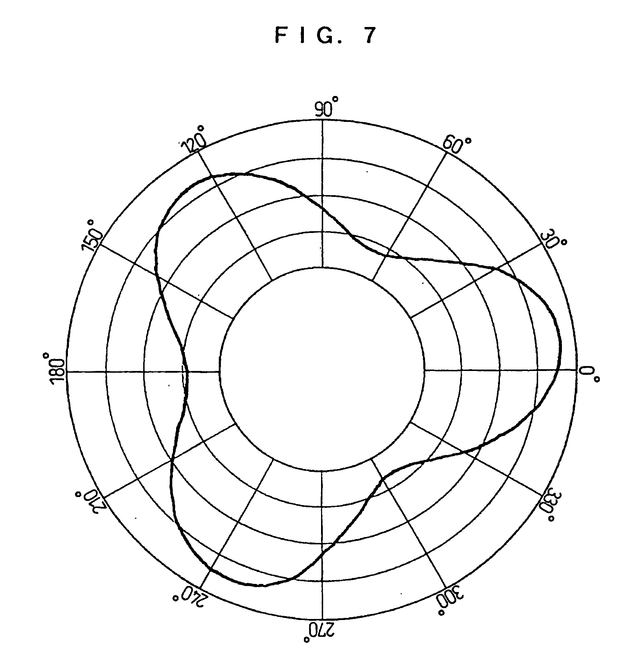

When the steel wheel (WS) contacts the brake disc (BD), in the whole wheel, as shown in FIG. 6, the above-mentioned gap (G) is created around the fastening portions by the bolts (B) and the steel wheel (WS) contacts the brake disc (BD) through only an area (C). Therefore, when the bolts (B) are screwed down, the flange portion (F) and the brake disc (BD) are bent toward the steel wheel (WS) as shown by arrows (d1, d2) in FIG. 5A. Thus, an inner side end portion of the outer ring (OR) is deformed in a direction shown by an arrow (d3) in FIG. 5A. As a result, mainly an inner side raceway (ORI) is deformed in such a direction that its diameter increases at portions corresponding to the fastening positions by the bolts (B) and circularity is degraded as shown in an example of actual measurement in FIG. 7.

It was found by the present inventors' study that the above deformation of the inner side raceway (ORI) of the outer ring (OR) was not suppressed by increase in stiffness of the flange portion (F).

Therefore, according to the present invention, a low-stiffness portion is formed at a root portion of the flange portion (F) on an inner side from the position where the internal screws (IS) are formed and the flange portion (F) is bent at the low-stiffness portion when the bolts (B) are screwed down. Thus, even if the gap (G) exists around the fastening portions by the bolts (B), it is possible to cause deformation of the outer ring (OR) due to screwing down of the bolts (B) mainly at the low-stiffness portion, thereby preventing the deformation from reaching positions where the raceways are formed and preventing degradation of circularity of the raceways.

The above operation and effect can be achieved almost without increase in cost by a simple structure by employing a structure in which a thin portion is formed along a circumferential direction at the root portion of the flange portion (F) as the low-stiffness portion.

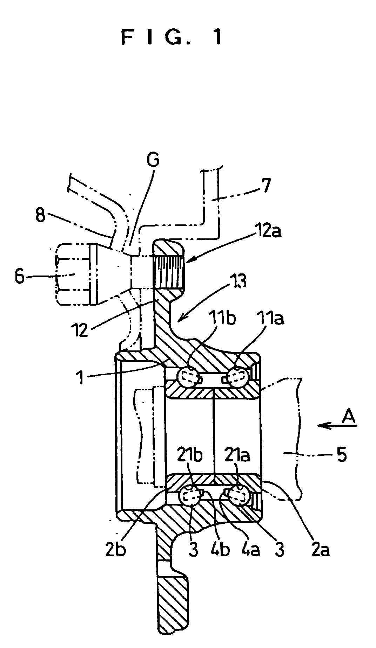

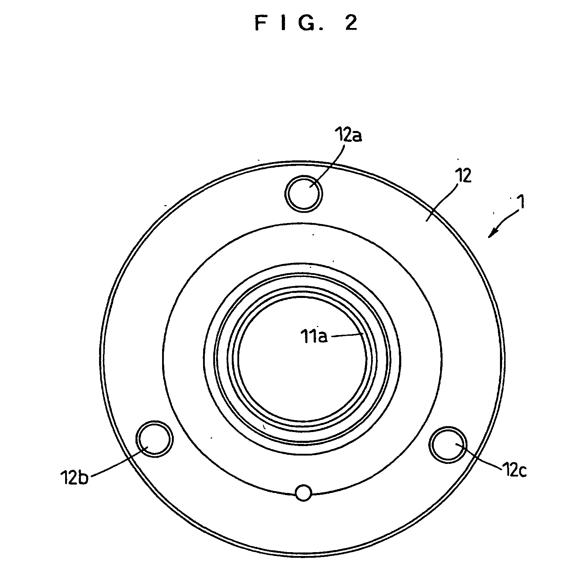

A wheel hub unit according to a preferred embodiment of the present invention will be described below with reference to FIGS. 1 to 3.

The hub unit has a hub and a bearing, the hub being integrated with an outer periphery of a bearing outer ring. The bearing has the outer ring 1, two inner rings 2a and 2b, a plurality of balls 3 mounted between the outer ring 1 and the inner rings 2a and 2b, and two ball cages 4a and 4b.

The outer ring 1 has at its inner peripheral face two raceways 11a and 11b which are adjacent to each other in an axial direction and at its outer peripheral face a flange portion 12 extending radially outward.

The flange portion 12 has at its side face three internal screws 12a to 12c for attaching the wheel at intervals of 120° in a circumferential direction.

Both the inner rings 2a and 2b are disposed to be adjacent to each other in the axial direction and are respectively formed at their outer peripheral faces with raceways 21a and 21b.

The raceways 21a and 21b face the respective raceways 11a and 11b of the outer ring 1 in a radial direction to form two ball raceways.

According to the above hub unit, the wheel 8 is fastened to the flange portion 12 through a brake disc 7 by fitting the inner rings 2a and 2b to an outside of an axle 5 provided to a vehicle body and by screwing the bolts 6 down into the internal screws 12a to 12c in the flange portion 12 of the outer ring 1.

The flange portion 12 is formed at its root portion on a radially inner side from the disposing positions of the internal screws 12a to 12c with a low-stiffness portion 13 having stiffness for allowing the flange portion 12 to be bent at the root portion when the bolts 6 are screwed down into the internal screws 12a to 12c.

Specifically, the low-stiffness portion 13 includes a thin portion provided in a circumferential direction at the root portion of the flange portion 12. A thickness of the low-stiffness portion 13 is about half of a thickness of the other portion of the flange 12, for example.

In the above structure, if the steel wheel 8, for example, which abuts with not a full circumference thereof on the brake disc 7 is fastened by respectively screwing the bolts 6 down into the internal screws 12a to 12c, the gap G is created between the wheel 8 and the brake disc 7 around the respective bolts 6.

Therefore, the flange portion 12 is drawn toward the steel wheel 8 at the fastening positions of the bolts 6 and is bent mainly at its low-stiffness portion 13 formed at the root portion. As a result, it is possible to prevent the bend from reaching the positions where the raceways 11a and 11b are formed.

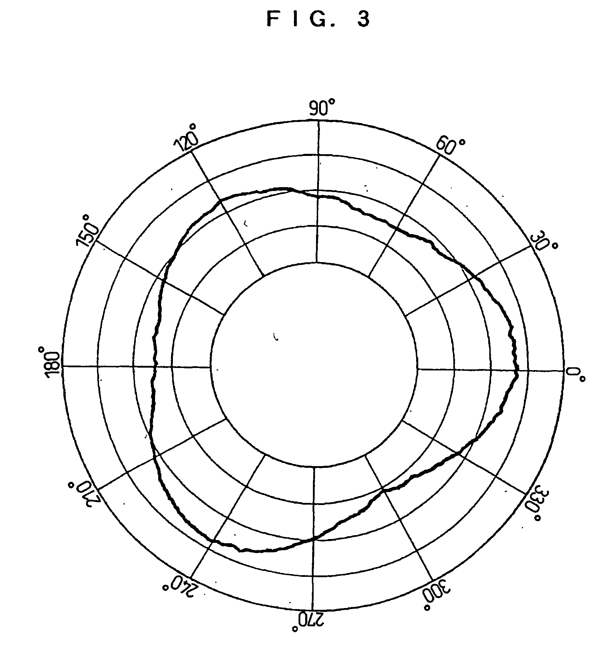

FIG. 3 shows a measurement result of circularity of the inner side outer ring raceway 11a in a state in which the steel wheel 8, for example, which abuts with not the full circumference thereof on the brake disc 7 is mounted to the above hub unit according to the embodiment of the invention. A magnification of FIG. 3 is the same as that of the above FIG. 7. Specifications of the hub unit used in the measurement in FIG. 3 are completely the same as those of the hub unit used in the measurement in FIG. 7 except for the low-stiffness portion 13 formed in the hub unit of FIG. 3. Therefore, it is possible to evaluate by the measurement results effect of suppressing degradation of circularity of the raceway by the low-stiffness portion 13 formed at the root portion of the flange portion 12.

The effect of existence of the low-stiffness portion 13 could be also evaluated by the following simulation using a finite element method.

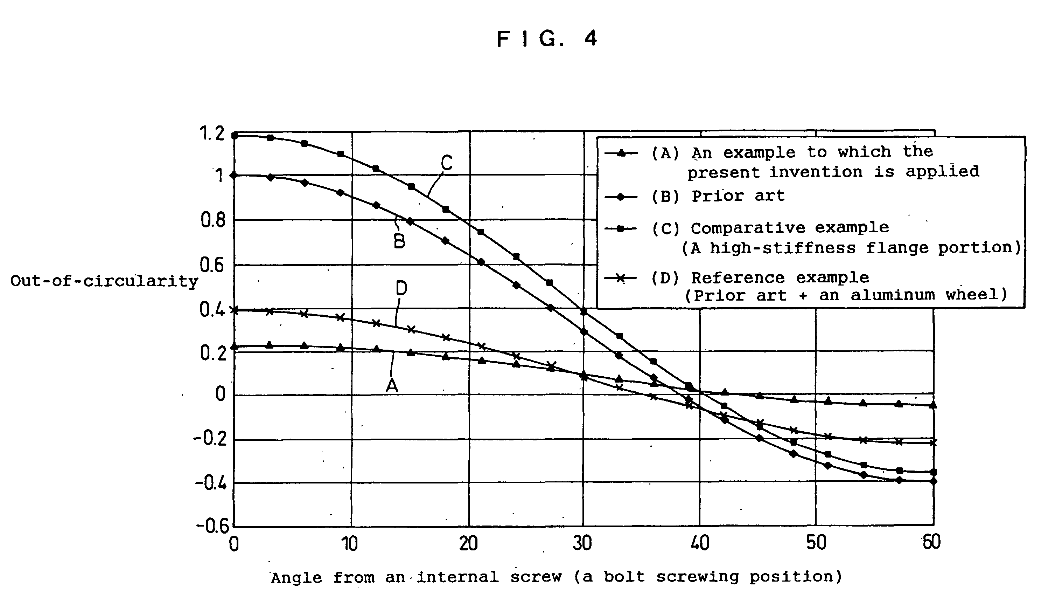

FIG. 4 is a graph showing a result. Submitted to the simulation are an example (A) to which the present invention is applied, the invention including the low-stiffness portion having the thin portion and provided in the circumferential direction at the root portion of the flange portion with a certain thickness, prior art (B) which is not provided with such a low-stiffness portion, a comparative example (C) in which a radius of the root portion of the flange portion is set at a large value to form a high-stiffness portion, a steel wheel being mounted to each of the above examples (A), (B), and (C), and a reference example (D) in which an aluminum wheel is mounted to the prior art, three internal screws into which bolts are to be screwed down being disposed at equal intervals on a certain circumference of the flange portion of each the above examples.

In FIG. 4, a horizontal axis represents an angle from a position (bolt screwing position) where an internal screw is formed toward the same direction and a vertical axis represents out-of-circularity of the inner side raceway of the outer ring on the assumption that out-of-circularity of a position where an internal screw is formed in the prior art is 1.

This graph shows the results only in a range of 0 to 60° because the internal screws are disposed at such positions to divide the flange into three equal parts in the circumferential direction and thus, an angle between the internal screws is 120° , and the graphs of both sides of a midpoint of 120° are symmetric to each other.

As is clear from FIG. 4, a degree of degradation of circularity of the raceway of the example (A) to which the present invention is applied is smaller than the case (D) in which the aluminum wheel in such the shape as to abut with a full circumference thereof on the brake disc is mounted to the prior art, not to mention that of the case (B) in which the steel wheel abutting with not a full circumference thereof on the brake disc is mounted to the prior art. In the case (C) in which stiffness of the root portion of the flange portion is increased, a degree of degradation of circularity of the raceway was found to increase.

While there has been described what is at present considered to be preferred embodiments of this invention, it will be understood that various modifications may be made therein, and it is intended to cover in the appended claims all such modifications as fall within the scope of this invention.

## Claims

1. A wheel hub unit comprising a hub integrated with an outer periphery of an outer ring of a bearing, wherein said bearing has an outer ring (1) having on its outer periphery a radially outward flange portion (12) integrated with said outer ring (1) and having a raceway (11a,11b) on its inner periphery, an inner ring (2a,2b) fitted to an outside of an axle (5), a plurality of balls (3) mounted between said outer ring (1) and said inner ring (2a,2b), and a cage (4a,4b) for respectively retaining said plurality of balls (3), and said flange portion (12) is formed at a side face thereof with an internal screw (12a,12b,12c) for bolting a wheel, **characterized in that** said flange portion (12) is formed at his root portion on a radially inner side from a position where said internal screw (12a,12b,12c) is formed with a low-stiffness portion (13) having stiffness for allowing said flange portion (12) to be bent at said root portion (13) for suppressing degradation of circularity of said raceway of said outer ring (1) when a bolt (6) is screwed down into said internal screw (12a, 12b, 12c).

2. A wheel hub unit according to claim 1, wherein said low-stiffness portion (13) includes a thin portion provided along a circumferential direction at said root portion of said flange portion (12).

## Patentansprüche

1. Radnabeneinheit mit eine Nabe, die mit einem Außenring eines Lagers verbunden ist, wobei das Lager einen Außenring (1) mit einem radial nach außen gerichteten Flanschbereich (12) auf dem äußeren Umfang, der mit dem Außenring (1) verbunden ist, und eine Laufbahn (11a,11b) auf dem inneren Umfang umfasst, einen Innenring (2a,2b), der auf der Außenseite einer Achse (5) angebracht ist, eine Anzahl von Kugeln (3) zwischen dem Außenring (1) und dem Innenring (2a,2b) und einem Käfig (4a,4b) zum Halten der Anzahl von Kugeln (3) umfasst, wobei der Flanschbereich (12) an einer Seitenfläche mit einem Innengewinde (12a,12b,12c) zum Anschrauben eines Rades versehen ist, **dadurch gekennzeichnet, dass** der Flanschbereich (12) in seinem Wurzelbereich auf einer radial inneren Seite, ausgehend von einer Position, in der das Innengewinde (12a,12b,12c) gebildet ist, mit einem Bereich (13) geringer Steifigkeit versehen ist, der eine Steifigkeit aufweist, die gestattet, dass der Flanschbereich (12) in dem Wurzelbereich (13) verbogen wird zur Unterdrückung einer Verschlechterung der Kreisförmigkeit der Laufbahn des Außenringes (1), wenn ein Bolzen (6) in das Innengewinde (12a, 12b, 12c) eingeschraubt wird.

2. Radnabeneinheit nach Anspruch 1, wobei der Bereich (13) geringer Steifigkeit einen dünnen Bereich entlang der Umfangsrichtung im Wurzelbereich des Flanschbereichs (12) umfasst.

## Revendications

1. Ensemble de moyeu de roue comprenant un moyeu faisant corps avec un pourtour extérieur d'une bague extérieure d'un roulement, ledit roulement ayant une bague extérieure (1) comportant sur son pourtour extérieur une partie formant collerette radialement vers l'extérieur (12) faisant corps avec ladite bague extérieure (1) et ayant un chemin de roulement (11a, 11b) sur son pourtour intérieur, une bague intérieure (2a, 2b) installée à l'extérieur d'un essieu (5), une pluralité de billes (3) montées entre ladite bague extérieure (1) et ladite bague intérieure (2a, 2b), et une cage (4a, 4b) pour retenir respectivement ladite pluralité de billes (3), et ladite partie formant collerette (12) est pourvue, sur une face latérale de celle-ci, d'un filetage intérieur (12a, 12b, 12c) pour visser une roue, **caractérisé en ce que** ladite partie formant collerette (12) est formée à sa base sur un côté radialement intérieur depuis un emplacement où ledit filetage intérieur (12a, 12b, 12c) est pourvu d'une partie (13) à faible rigidité ayant une rigidité pour permettre la flexion de ladite partie formant collerette (12) à ladite base (13) pour supprimer la dégradation de circularité dudit chemin de roulement de ladite bague extérieure (1) lorsqu'une vis (6) est vissée dans ledit filetage intérieur (12a, 12b, 12c).

2. Ensemble de moyeu de roue selon la revendication 1, dans lequel ladite partie (13) à faible rigidité comporte une partie mince réalisée dans une direction circonférentielle au niveau de ladite base de ladite partie formant collerette (12).
